Europäisches Patentamt

European Patent Office

Office européen des brevets

(19)

(11) **EP 0 425 251 B1**

(12) **EUROPEAN PATENT SPECIFICATION**

(45) Date of publication and mention
of the grant of the patent:
**10.04.1996 Bulletin 1996/15**

(51) Int Cl.6: **G02F 1/1335**, G02B 3/00,
H04N 9/31

(21) Application number: **90311625.9**

(22) Date of filing: **23.10.1990**

(54) **Image display apparatus**

Bildanzeigevorrichtung

Dispositif d'affichage

(84) Designated Contracting States:
**DE FR GB NL**

(30) Priority: **23.10.1989 JP 275410/89**

(43) Date of publication of application:
**02.05.1991 Bulletin 1991/18**

(73) Proprietors:
- **SHARP KABUSHIKI KAISHA**
  **Osaka 545 (JP)**
- **NIPPON SHEET GLASS CO. LTD.**
  **Chuo-ku Osaka-shi Osaka-fu (JP)**

(72) Inventors:
- **Hamada, Hiroshi**
  **Nara-shi, Nara-ken (JP)**
- **Funada, Fumiaki**
  **Yamatokoriyama-shi, Nara-ken (JP)**
- **Hamanaka, Kenjiro, c/o Nippon Itagarasu**
  **Tsukuba-shi, Ibaragi-ken (JP)**
- **Tanaka, Kouji**
  **Tsukuba-shi, Ibaragi-ken (JP)**

(74) Representative: **Brown, Kenneth Richard et al**
**R.G.C. Jenkins & Co.**
**26 Caxton Street**
**London SW1H 0RJ (GB)**

(56) References cited:
**JP-A- 1 187 502**          **US-A- 4 790 632**

- **PATENT ABSTRACTS OF JAPAN, vol. 13, no. 222 (P-876)(3570) 24 May 1989 & JP A 1035416**
- **PATENT ABSTRACTS OF JAPAN, vol 6, no 129 (P-128)(1007) 15 July 1982 & JP A 57053702**
- **OPTICAL ENGINEERING, vol. 24, no. 5, October 1985, BELLINGHAM, US, pp 796-802; J.J. COWAN: 'holographic honeycomb microlens'**
- **PATENT ABSTRACTS OF JAPAN, vol. 8, no. 48 (P-258)(1485) 3 March 1984 & JP A 58198001**
- **PATENT ABSTRACTS OF JAPAN, vol. 10, no. 9 (P-420)(2066) 14 January 1986 & JP A 60165622**
- **PATENT ABSTRACTS OF JAPAN, vol. 11, no. 303 (P-622)(2750) 3 October 1987 & JP A 62094826**
- **PATENT ABSTRACTS OF JAPAN, vol. 10, no. 143 (P-459)(2200) 27 May 1986 & JP A 60262131**
- **PATENT ABSTRACTS OF JAPAN, vol. 10, no. 93 (P-445)(2150) 10 April 1986 & JP A 60227233**

## Description

The invention generally relates to image display, and more particularly, to an image display apparatus provided with a refractive index distribution type flat-plate microlens array, which is suitable as a light condensing or converging means for brightening the display surface by focusing illuminating light for a transmission type display panel such as a liquid crystal panel, etc. having a plurality of picture elements or pixels, onto the region of the pixels.

Commonly, in a liquid crystal display panel to be used in projection type liquid crystal display apparatus as referred to above, minimum display units called pixels or picture elements (referred to as pixels hereinafter) are regularly arranged, and by applying independent driving voltages to the respective pixels so as to vary optical characteristics of the liquid crystal constituting each pixel, images and characters, etc. are displayed as desired.

For impressing independent driving voltages to the respective pixels, there are known a simple matrix system, and an active matrix system in which nonlinear two terminal elements such as MIM (Metal Insulator Metal) or the like, or three terminal switching elements such as thin film transistors, etc. are provided in the respective pixels.

In the active matrix system, it is required that, in order to apply the independent driving voltage to each of the pixels, elements such as the thin film transistors or MIM, etc. are provided on the respective pixels, with lines for supplying driving signals thereto being connected between the pixels, and therefore, proportional area occupied by the pixel region in the image surface (or numerical aperture) is reduced. Of the light projected onto the panel, light incident upon a region other than the pixel region is absorbed or reflected by the thin film transistors, signal lines, or shield masks provided depending on necessity, etc., and does not reach a screen. Accordingly, in the case where the liquid crystal panel is illuminated by the same intensity of illumination, the image face becomes darker as the numerical aperture is reduced. Such a state applies both to the cases where the liquid crystal panel is directly observed and also where enlarged projection is effected by a projection lens.

In order to solve the problem that the image surface becomes dark due to the small numerical aperture, there have conventionally been proposed, for example, in Japanese Laid-Open Patent Publications Nos. 60-165621 to 60-165624, methods for improving utilization of illuminating light by condensing it onto each pixel region, with a microlens array being provided at the light source side of the display panel. Particularly, Publication No. 60-165621 discloses formation of a refractive index distribution region on a substrate of the display panel, and illustrates a refractive index distribution diagram having a concave lens effect in its embodiment. Meanwhile, Publication No. 60-262131 discloses provision of microlens arrays at opposite sides of the liquid crystal panel.

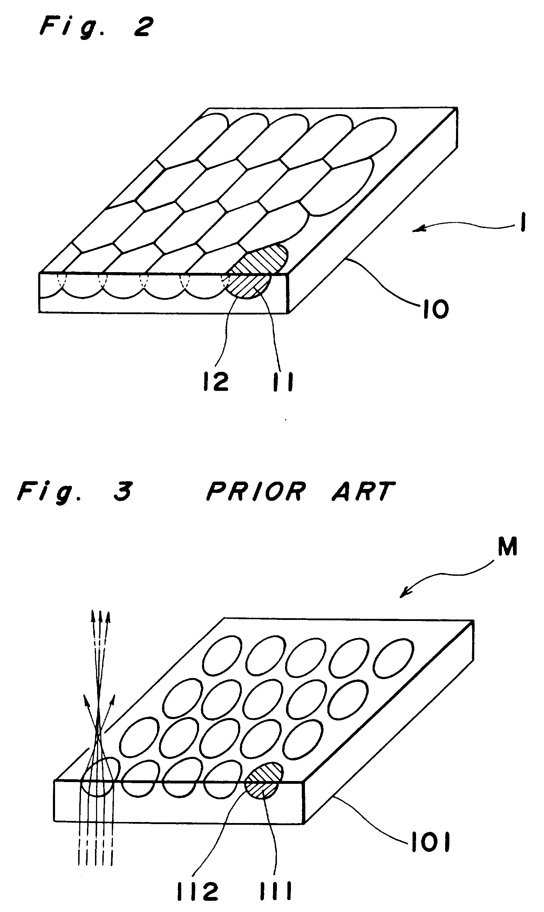

Fig. 3 shows a refractive index distribution type flat-plate microlens array M which has been conventionally used as a condensing or converging means of projection light onto a liquid crystal panel as referred to above.

The known flat-plate microlens array M in Fig. 3 includes a substrate 101, and a plurality of microlenses 111 formed on the substrate 101 by an ion exchange process which is one of diffusion processes so that the neighbouring microlenses may not contact each other, with the sectional shape of the refractive index distribution region being formed into approximately a semi-spherical configuration. Accordingly, an advanced line 112 of an ion diffusion region called a diffusion front of the microlenses 111 is separated as shown.

The reason for separating the diffusion front 112 which is the boundary between the respective microlenses 111 as described above is such that it has been generally considered that rotational symmetry of the refractive distribution configuration with respect to the optical axis, which is necessary to obtain a favourable lens effect, is undesirably impaired by the fusion of the diffusion front 112, thereby to produce aberration component with directivity, thus giving rise to deterioration in the condensing characteristic of the lens.

A microlens array comparable to that of Fig. 3 is known from US-A-4 790 632.

However, the conventional flat-plate microlens array as a condensing means referred to above has problems as described hereinbelow.

The first problem is such that, even when the refractive index distribution of the microlenses 111 is in approximately a semi-spherical shape rotationally symmetrical with respect to the optical axis, if the distribution thereof in the radial direction is improper, spherical aberration tends to take place, thus adversely affecting the condensing characteristic of the lens.

With respect to the above, the present inventors have found, through repeated experiments and investigations that, generally in the case where a flat-plate microlens array is produced by the ion exchange method, gradient of the refractive index distribution in the vicinity of the diffusion front 112 is large, and therefore, the light incident upon the surrounding region of the microlenses 111 is excessively refracted, thus resulting in spherical aberration.

The second problem resides in that, since the microlenses 111 are arranged so that the neighbouring ones are out of contact with each other, filling rate of the microlenses 111, i.e. ratio of the area occupied by the microlenses 111 to the total area of the microlens array substrate 101 can not be made higher than a certain limit. By way of example, such limited filling rate may be represented by

$$\pi/4 \doteqdot 78.5\%$$

when circular microlenses are arranged in a square lattice shape, and by

$$\pi/2 \cdot \sqrt{3} \doteqdot 90.6\%$$

in the case where circular microlenses are densely arranged in a hexagonal lattice shape, but in actual practice, since the microlens arrangement must be in agreement with the pixel arrangement of the display panel, the filling rate becomes lower than the above. Since gaps among the microlenses are of an ion non-diffusion region and have no refracting function, light incident upon said region advances straight as it is, without contributing to the light condensing effect.

As described so far, the conventional flat-plate microlens array has problems with respect to the light condensing characteristic, and therefore, in the conventional projection type image display apparatus employing such flat-plate microlens array, darkness in the display image surface has not been fully improved.

Accordingly, an object of the invention is to provide an image display apparatus which is high in utilization of illuminating light and capable of obtaining a bright image on the display surface by improving the condensing effect of a flat-plate microlens array for a transmission type display panel.

Another object of the invention is to provide an image display apparatus of the above described type, which is simple in construction and stable in functioning at high accuracy.

In a first aspect, the invention provides an image display apparatus which comprises a display panel means having a plurality of pixel regions, and a microlens array having a plurality of microlenses arranged for converging illuminating light onto respective ones of said pixel regions, wherein said microlens array comprises a substrate having planar outer major surfaces, said microlenses being defined by variation of the refractive index of the material of said substrate, and said microlenses having boundaries which merge contiguously between neighbouring microlenses to provide, within said substrate, a contour of iso-refractive index.

In a second aspect, the invention provides a microlens array having a plurality of microlenses arranged for respectively converging incident light onto a plurality of pixel regions adjacent the array, said microlens array comprising a substrate having planar outer major surfaces, said microlenses being defined by variation of the refractive index of the material of said substrate, and said microlenses having boundaries which merge contiguously between neighbouring microlenses to provide, within said substrate, a contour of iso-refractive index.

One preferred embodiment includes a flat-plate microlens array of a refractive index distribution type, which is constituted by forming a plurality of microlenses for converging illuminating light onto the respective ones of said pixel regions, on a substrate by a diffusion process, wherein diffusion fronts of the neighbouring microlenses of said flat-plate microlens array are fused into each other so as to form one continuous curved surface within said substrate.

It should be noted here that the configuration of the above one continuous curved surface should preferably be made so as to be suitable for the pitch of the pixels, and the pixel openings of the display panel.

By forming the diffusion fronts of the neighbouring microlenses fused into each other as referred to above, gradient of the refractive index distribution in and close to the respective microlenses becomes small, and therefore, the adverse effect due to the spherical aberration taking place due to excessive refraction around the microlenses may be advantageously reduced.

Furthermore, since the non-lens region between the microlenses is eliminated, the filling rate with respect to the substrate of the microlenses shows a value close to 100%, with a consequent improvement of the condensing effect.

Moreover, it has been clarified through experiments by the present inventors that, although the rotational symmetrical nature of the refractive index distribution may be impaired to a certain extent by the partial fusing between the neighbouring microlenses to each other, the condensing characteristic of the lenses is hardly adversely affected thereby as described in more detail later.

Accordingly, the illuminating light from the light source is effectively converged by the flat-plate microlens array so as to concentratedly irradiate the pixel regions of the display panel, and thus, bright images may be obtained as compared with those of the conventional projection type image display apparatus.

In the accompanying drawings:

Fig. 1 is a schematic diagram showing construction of a projection type image display apparatus according to one preferred embodiment of the invention,

Fig. 2 is a perspective view showing on an enlarged scale, a flat-plate microlens array employed in the image display apparatus of Fig. 1,

Fig. 3 is a view similar to Fig. 2, which particularly shows a conventional flat-plate microlens array,

Fig. 4(a) is a fragmentary top plan view of the flat-plate microlens array of Fig. 2, showing in an enlarged scale, the arrangement of the microlenses therein,

Fig. 4(b) is a cross section taken along the line IV(b)-IV(b) in Fig. 4(a),

Fig. 5(a) is a view similar to Fig. 4(a), which particularly shows a conventional type flat-plate microlens array prepared for comparison with that of the embodiment of Fig. 4(a), and

Fig. 5(b) is a cross section taken along the line V(b)-V(b) in Fig. 5(a).

Before the description of the embodiment proceeds, it is to be noted that like parts are designated by like reference numerals throughout the accompanying drawings.

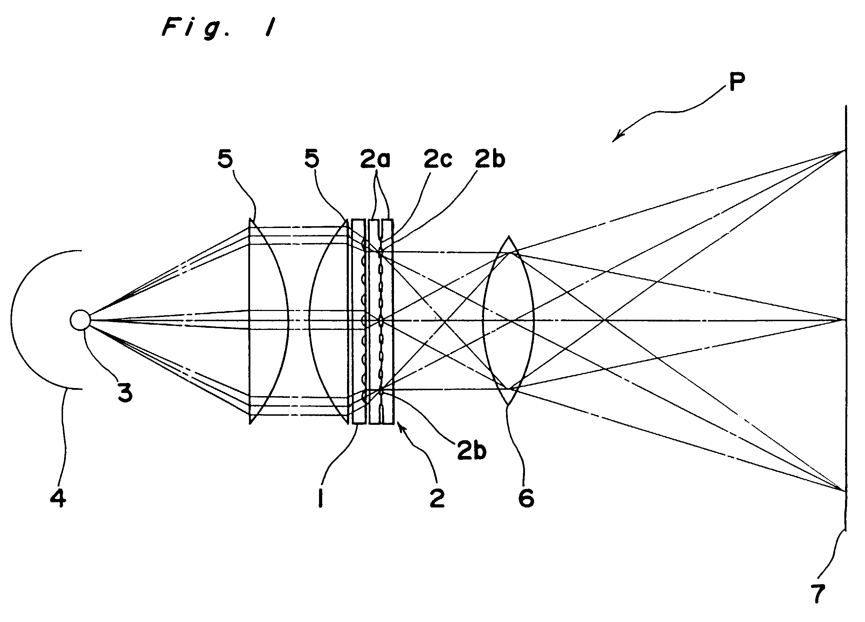

Referring now to the drawings, there is shown in Fig. 1 a projection type image display apparatus P according to one preferred embodiment of the present invention, with a flat-plate microlens array employed therein being shown in Fig. 2.

In Fig. 1, the image display apparatus P includes a flat-plate microlens array 1 having a plurality of microlenses 11 formed on a substrate 10 (Fig. 2), a liquid crystal display panel 2 having a plurality of pixel regions 2b, a white light source 3 of a halogen lamp, metal halide lamp, xenon lamp or the like, a reflecting mirror 4 for reflecting light emitted from the light source 3 to be directed to said liquid crystal panel 2, condenser lenses 5 for converging the light from the light source 3, and a projecting lens 6 for projection of an image onto a projection screen 7.

The image display apparatus P as described above is so arranged as to collect the light emitted from the light source 3, and direct it towards the projecting lens 6 through the reflecting mirror 4 and the condenser lenses 5 for projection onto the screen 7. Flux of light passing through the condenser lenses 5 is converged by the flat-plate microlens array 1 so as to be transmitted through the pixel region 2b of the liquid crystal display panel 2, and is modulated in intensity according to the image signal voltage applied to the liquid crystal layer, and thereafter, projected onto the screen 7 by the projecting lens 6.

The above liquid crystal display panel 2 has a diagonal line of the display image surface of 75mm, pixel pitch of 190μm (longitudinally) x 161μm (laterally), pixel region of 88μm (longitudinally) x 104μm (laterally), opening rate or numerical aperture of 30%, refractive index n of the substrate at 1.53, and thickness of its substrate 2a at 1.1 mm. In the present embodiment, although twisted nematic mode is adopted for the functioning mode of the liquid crystal, it may be replaced by any other mode so far as such mode suits the purpose.

In the functioning modes of most liquid crystals, it is required to simultaneously use a polarizing plate (not shown). Although the polarizing plate may be directly stuck onto the liquid crystal display panel, such a practice should preferably be avoided, since temperature rise following light absorption by the polarizing plate adversely affects the functioning characteristic of the liquid crystal when a light source with high brightness is employed. The position for disposing the polarizing plate may be at any place, provided that nothing which may vary the polarizing characteristic is inserted with respect to the liquid crystal display panel. By way of example, the flat-plate microlens array may be inserted between the liquid crystal display panel and the polarizing plate (not shown).

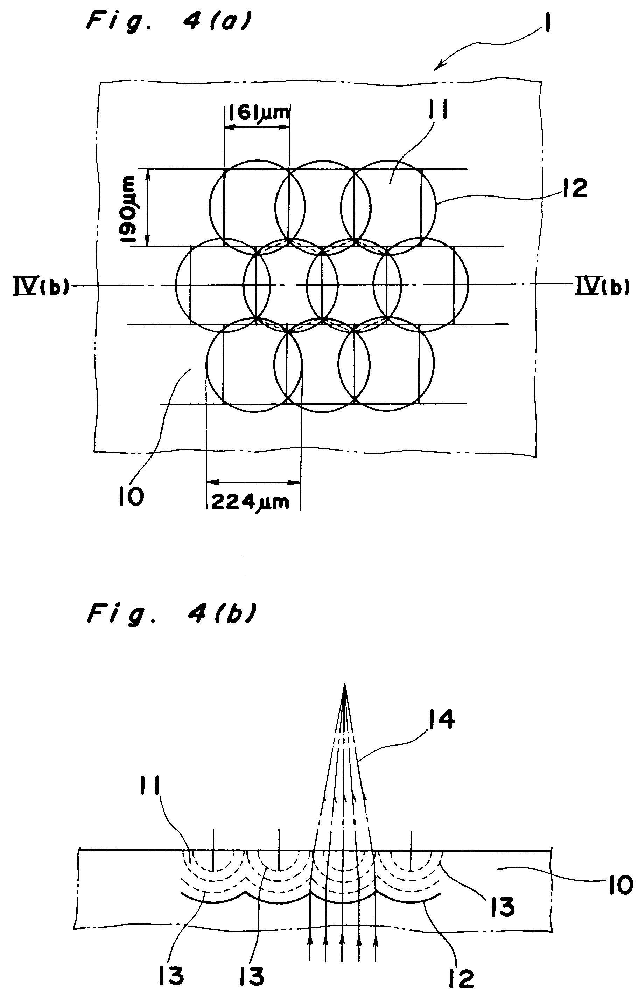

Referring particularly to Figs. 2, 4(a) and 4(b), the flat-plate microlens array 1 will be explained in detail hereinbelow.

In Fig. 4(a), the pitch of the microlenses 11 in the flat-plate microlens array 1 corresponds to the pixel pitch at 190 μm (longitudinally) x 161 μm (laterally) of the liquid crystal display panel 2, while the focal distance thereof is equal to the thickness of the substrate 2a for the liquid crystal display panel 2 (1.1/1.53=0.72 mm in air).

The microlenses 11 referred to above are prepared by an ion exchange process as described below.

In the first place, a metallic thin film of Aℓ, Ti, Ni, Cr or the like is formed on the surface of the glass substrate 10 by a known thin film forming technique such as the sputtering process, etc. Subsequently, very small opening windows corresponding in arrangement to that of the pixels of the liquid crystal panel 2 are formed in said metallic thin film by the known lithographic technique, thereby to provide a metallic mask. This glass substrate 10 is immersed for a predetermined period of time in a solution containing ion having a higher refractive index (referred to as a second ion hereinafter) than that of ion contained in said glass substrate (referred to as a first ion). By the above processing, the ion exchange is effected through the opening windows of the metallic mask, and consequently, the approximately semi-spherical microlenses 11 of the refractive index distribution type whose refractive index is gradually lowered from the vicinity of the opening windows of the metallic mask towards the peripheral portion thereof, are formed.

In the above case, by properly setting the ion exchange time, etc., it is so arranged that the respective regions to which the second ionic species are diffused, i.e. diffusion fronts 12 at the advanced lines of the respective microlenses 11 are fused to each other.

When the pixel pitch of the liquid crystal display panel is at 190 μm (longitudinally) x 161 μm (laterally) as in the present embodiment, the flat-plate microlens array 1 without any non-diffused region of ion over the entire surface of the glass substrate 10 may be produced by rendering the diffusion front 12 of each microlens 11 to be about 224 μm in diameter.

As is seen from Fig. 4(b) showing the state of refractive index and the state of converging of light at the cross section IV(b)-IV(b) of Fig. 4(a), owing to the fusion of the diffusion fronts 12 of the respective microlenses 11 to each other, the diffusion fronts 12 extending over the entire surface of the lens array 1 are formed into one continuous curved surface within the substrate 10.

As a result, in the distribution of the refractive index (equal refractive index lines are represented by the numeral 13) of the respective microlenses, the refractive index gradient becomes small in the peripheral portion of each microlens 11, and light passing through the peripheral portion of the microlens is not bent due to excessive refraction, and thus, all of the light rays 14 are focused generally into one point favourably.

It has also been found that, although the shape of the fused region for the diffusion fronts of the neighbouring microlenses 11 is not rotationally symmetrical with respect to the optical axis of each microlens 11, light condensation is not adversely affected thereby excessively, and that each microlens 11 functions to focus light rays incident upon a hexagonal region shown by a dotted line in Fig. 4(a) (the shape of the microlens 11 shown in Fig. 2 corresponds to the shape in this region) approximately into one point favourably.

The flat-plate microlens array 1 having such a superior condensing characteristic is installed in the state as shown in Fig. 1 through sticking by arranging positions of the respective microlenses 11 to correspond to the positions of the respective pixel regions 2b of the liquid crystal display panel 2, with the use of a transparent optical bonding agent having refractive index generally equal to that of the transparent substrate of the liquid crystal display panel.

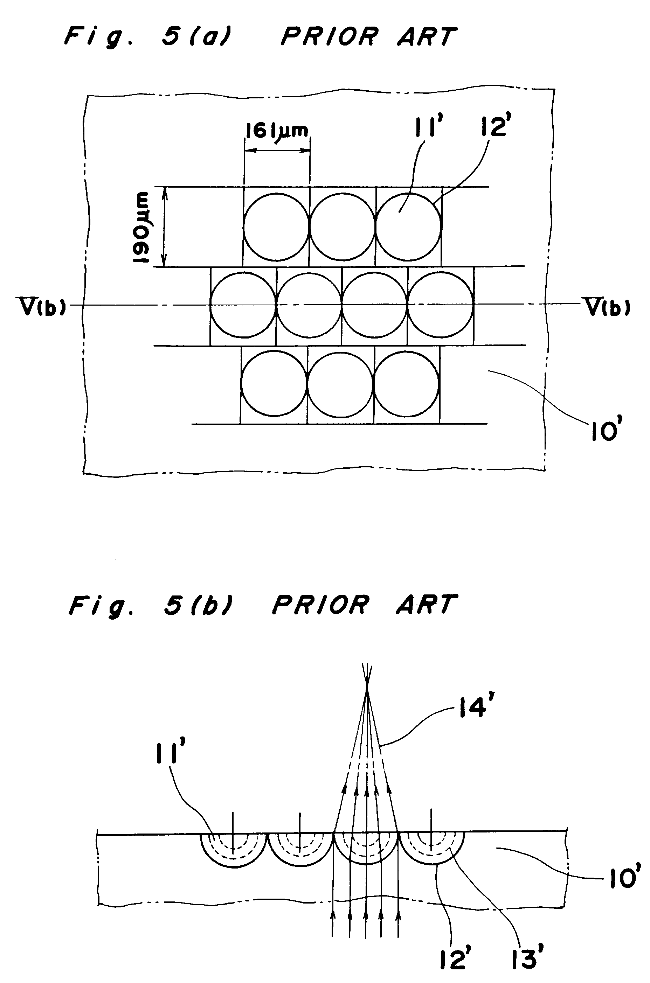

For comparison with the above flat-plate microlens array 1 used for the projection type image display apparatus according to the present invention, a conventional type flat-plate microlens array which has the lens diameter of 161 $\mu$m, and in which the diffusion fronts of the neighbouring microlenses only contact each other without fusing, was prepared as shown in Figs. 5(a) and 5(b), in which like parts in Figs. 4(a) and 4(b) are designated by like reference numerals, with addition of a prime or dash thereto for brevity of explanation.

In the case of the conventional type flat-plate microlens array in which the diffusion fronts only contact each other without fusing, light rays 14' incident upon the peripheral portion of the respective microlenses 11' are excessively refracted since the refractive index gradient at said peripheral portion is too large, and the focal positions of the respective light rays are deviated to a large extent between the central portion of the lens and the peripheral portion thereof, thus giving rise to a large spherical aberration. The above result was similar to that of the known microlens array in which the neighbouring diffusion fronts were separated without contacting.

Upon investigation into the brightness of the image to be displayed by the projection type image display apparatus of the present embodiment, it was about 2.5 times that in the arrangement in which the flat-plate microlens array 1 was not employed. Meanwhile, in the case where the flat-plate microlens array having the construction as in the conventional arrangement and prepared for comparison was used, the brightness of the display image was about 1.8 times that of the arrangement without using such microlens array.

On the other hand, in the case where a condensing or converging spot upon illumination of the flat-plate microlens array 1 by white parallel light rays was observed by a microscope, in the conventional flat-plate microlens array, halo coloration due to aberration at the peripheral portion of the microlens was observed around the condensing spot when the microscope was focused to a point where the size of the condensing spot became the smallest, but in the flat-plate microlens array 1 as used in the present invention, no halo was noticed around the condensing spot, although the shape thereof was a slightly rounded hexagonal shape.

Incidentally, according to the present invention, although the flat-plate microlens array 1 was formed so as to provide no clearance between the microlenses 11, in the case where the microlens array is prepared to provide no clearance between the microlenses as above, the areas for the region in which the diffusion fronts of the respective microlenses are fused markedly differ according to the directions, and thus, the shape of the condensing spots is disturbed to a certain extent. In such an instance, there may be a case where a better condensing effect is obtained by slightly reducing the region in which the diffusion fronts are fused through provision of small clearances between the respective microlenses. Even in the above case, the purpose of the present invention to improve condensing effect and utilization rate of illuminating light may be achieved through reduction of the spherical aberration arising from the peripheral portion of the respective microlenses by providing the diffusion region of the microlenses, and through increase of the area occupied by the microlenses with respect to the entire surface of the microlens array, etc.

It should be noted here that, in the foregoing embodiment, although the present invention is described with reference to the Koehler illumination, the present invention may be applied to other illumination methods, e.g. critical illumination, telecentric system, etc. as well.

It should also be noted that, although the foregoing embodiment has been described with reference to the projection type image display apparatus employing only one liquid crystal display panel, the concept of the present invention is not limited in its application, to such image display apparatus alone, but may be readily applied, for example, to a system in which three liquid crystal panels are employed so as to display images of three primary colours respectively for obtaining coloured images by optically combining them. Moreover, the display panel is not limited to the liquid crystal panel, but any other display panel of transmission type may be employed as well.

Furthermore, in the foregoing embodiment, although the flat-plate microlens array 1 is prepared by the ion exchange process, it may be produced by a monomer diffusion copolymerization process, i.e. a process including the steps of preparing a transparent substrate by half-polymerization of a first monomer, providing a molecule penetration preventing mask having many openings corresponding to the arrangement of the lenses to be formed on the surface thereof, and completing the polymerization after diffusing a second monomer into the substrate through the openings of the molecule penetration preventing mask.

Moreover, although the flat-plate microlens array is formed by the semi-spherical microlenses according to the present embodiment, such microlens array may be replaced by one formed with lenticular lenses, Fresnel lens and the like. The shape of the microlens should preferably be determined by the pixel arrangement of the display panel and the shape of the openings of pixels, etc.

As is clear from the foregoing description, according to the present invention, since the diffusion fronts of the neighbouring microlenses contact each other to form one continuous curved surface, not only the spherical aberration arising from the excessive refraction in the peripheral portions of the respective microlenses of the flat-plate microlens array in the conventional arrangements is reduced, but the occupying area of the microlenses with respect to the entire substrate surface of the flat-plate microlens array may be raised close to 100%, and thus, the illuminating light incident upon the display panel can be focused in the pixel region without loss for effective utilization, thereby to provide a bright projection image.

Although the present invention has been fully described by way of example with reference to the accompanying drawings, it is to be noted here that various changes and modifications will be apparent to those skilled in the art within the scope of the present invention, as defined by the claims.

## Claims

1. An image display apparatus which comprises a display panel means (2) having a plurality of pixel regions (2b), and a microlens array (1) having a plurality of microlenses (11) arranged for converging illuminating light onto respective ones of said pixel regions, wherein said microlens array (1) comprises a substrate (10) having planar outer major surfaces, said microlenses (11) being defined by variation of the refractive index (13) of the material of said substrate (10), and said microlenses (11) having boundaries which merge contiguously between neighbouring microlenses to provide, within said substrate (10), a contour (12) of iso-refractive index.

2. An image display apparatus as claimed in claim 1, wherein said display panel means (2) is of liquid crystal.

3. An image display apparatus as claimed in claim 2, wherein said liquid crystal display panel means (2) includes one liquid crystal display panel.

4. An image display apparatus as claimed in claim 2, wherein said liquid crystal display panel means (2) includes three liquid crystal panels respectively displaying images in three primary colours which are optically combined to provide a coloured image.

5. An image display apparatus as claimed in claim 1, wherein said display panel means is of a transmission type.

6. An image display apparatus as claimed in claim 1, wherein said microlens array (1) is prepared by an ion exchange process.

7. An image display apparatus as claimed in claim 1, wherein said microlens array (1) is prepared by a monomer diffusion copolymerization process.

8. An image display apparatus as claimed in claim 1, wherein said microlens array (1) is constituted by microlenses (11) each having semi-spherical shape.

9. An image display apparatus as claimed in claim 1, wherein said microlens array (1) is constituted by lenticular lenses in which a large number of cylindrical lenses are arranged in a parallel relation at equal intervals.

10. An image display apparatus as claimed in claim 1, wherein said microlens array (1) is constituted by Fresnel lenses for the microlenses (11).

11. A microlens array (1) having a plurality of microlenses (11) arranged for respectively converging incident light onto a plurality of pixel regions adjacent the array, said microlens array (1) comprising a substrate (10) having planar outer major surfaces, said microlenses (11) being defined by variation of the refractive index (13) of the material of said substrate (10), and said microlenses (11) having boundaries which merge contiguously between neighbouring microlenses to provide, within said substrate (10), a contour (12) of iso-refractive index.

## Patentansprüche

1. Bildanzeigevorrichtung mit einer Anzeigetafeleinrichtung (2) mit mehreren Pixelbereichen (2b) und einem Mikrolinsenarray (1) mit mehreren Mikrolinsen (11), die so angeordnet sind, daß sie Beleuchtungslicht auf jeweilige Pixelbereiche konvergieren, wobei das Mikrolinsenarray (1) ein Substrat (10) mit ebenen Außenhauptflächen aufweist, wobei die Mikrolinsen (11) durch Änderungen des Brechungsindex (13) des Materials des Substrats (10) gebildet sind und diese Mikrolinsen (11) Grenzen aufweisen, die zwischen benachbarten Mikrolinsen zusammenhängend verschmolzen sind, um, innerhalb des Substrats (10), einen Verlauf (12) mit gleichem Brechungsindex zu bilden.

2. Bildanzeigevorrichtung nach Anspruch 1, bei der die Anzeigetafeleinrichtung (2) einen Flüssigkristall aufweist.

3. Bildanzeigevorrichtung nach Anspruch 2, bei der die Flüssigkristall-Anzeigetafeleinrichtung (2) eine Flüssigkristall-Anzeigetafel enthält.

4. Bildanzeigevorrichtung nach Anspruch 2, bei der die Flüssigkristall-Auzeigetafeleinrichtung (2) drei Flüssigkristalltafeln enthält, die jeweils ein Bild mit einer von drei primärfarben anzeigen, die zum Erzeugen eines Farbbilds optisch kombiniert werden.

**5.** Bildanzeigevorrichtung nach Anspruch 1, bei der die Anzeigetafeleinrichtung vom Transmissionstyp ist.

**6.** Bildanzeigevorrichtung nach Anspruch 1, bei der das Mikrolinsenarray (1) durch einen Ionenaustauschprozeß hergestellt ist.

**7.** Bildanzeigevorrichtung nach Anspruch 1, bei der das Mikrolinsenarray (1) durch einen Monomerdiffusions-Copolymerisationsprozeß hergestellt ist.

**8.** Bildanzeigevorrichtung nach Anspruch 1, bei der das Mikrolinsenarray (1) aus Mikrolinsen (11) mit jeweils Halbkugelform besteht.

**9.** Bildanzeigevorrichtung nach Anspruch 1, bei der das Mikrolinsenarray (1) aus Rasterlinsen besteht, bei denen eine große Anzahl Zylinderlinsen in paralleler Beziehung mit gleichen Abständen angeordnet sind.

**10.** Bildanzeigevorrichtung nach Anspruch 1, bei der das Mikrolinsenarray (11) aus Fresnellinsen für die Mikrolinsen (11) besteht.

**11.** Mikrolinsenarray (1) mit einer Vielzahl von Mikrolinsen (11), die so angeordnet sind, daß sie jeweils einfallendes Licht auf eine Vielzahl von dem Array benachbarte Pixelbereiche konvergieren, wobei das Mikrolinsenarray (1) ein Substrat (10) mit ebenen Außenhauptflächen aufweist, wobei die Mikrolinsen (11) durch Änderungen des Brechungsindex (13) des Materials des Substrats (10) gebildet sind und diese Mikrolinsen (11) Grenzen aufweisen, die zwischen benachbarten Mikrolinsen zusammenhängend verschmolzen sind, um, innerhalb des Substrats (10), einen Verlauf (12) mit gleichem Brechungsindex zu bilden.

## Revendications

**1.** Dispositif d'affichage d'images comprenant un moyen formant panneau d'affichage (2) qui comporte plusieurs zones de pixels (2b), et un réseau de microlentilles (1) qui comporte plusieurs microlentilles (11) disposées pour faire converger une lumière d'éclairage sur des zones de pixels respectives desdites zones de pixels, ledit réseau de microlentilles (1) comprenant un substrat (10) qui présente des surfaces principales extérieures planes, lesdites microlentilles (11) étant définies par une variation de l'indice de réfraction (13) de la matière dudit substrat (10), et lesdites microlentilles (11) possédant des limites qui se fondent les unes dans les autres d'une manière contiguë entre des microlentilles voisines pour définir, au sein dudit substrat (10), un profil (12) ayant un indice d'isoréfraction.

**2.** Dispositif d'affichage d'images tel que défini dans la revendication 1, dans lequel ledit moyen formant panneau d'affichage (2) est fait de cristaux liquides.

**3.** Dispositif d'affichage d'images tel que défini dans la revendication 2, dans lequel ledit moyen formant panneau d'affichage à cristaux liquides (2) comprend un seul panneau d'affichage à cristaux liquides.

**4.** Dispositif d'affichage d'images tel que défini dans la revendication 2, dans lequel ledit moyen formant panneau d'affichage à cristaux liquides (2) comprend trois panneaux à cristaux liquides qui affichent respectivement des images dans trois couleurs primaires combinées optiquement pour former une image en couleurs.

**5.** Dispositif d'affichage d'images tel que défini dans la revendication 1, dans lequel ledit moyen formant panneau d'affichage est du type à transmission.

**6.** Dispositif d'affichage d'images tel que défini dans la revendication 1, dans lequel ledit réseau de microlentilles (1) est préparé par un procédé d'échange d'ions.

**7.** Dispositif d'affichage d'images tel que défini dans la revendication 1, dans lequel ledit réseau de microlentilles (1) est préparé par un procédé de copolymérisation par diffusion de monomère.

**8.** Dispositif d'affichage d'images tel que défini dans la revendication 1, dans lequel ledit réseau de microlentilles (1) est constitué par des microlentilles (11) ayant chacune une forme hémisphérique.

**9.** Dispositif d'affichage d'images tel que défini dans la revendication 1, dans lequel ledit réseau de microlentilles (1) est constitué par des lentilles lenticulaires dans lesquelles un grand nombre de lentilles cylindriques sont disposées parallèlement les unes aux autres à des intervalles égaux.

**10.** Dispositif d'affichage d'images tel que défini dans la revendication 1, dans lequel ledit réseau de microlentilles (1) est constitué par des lentilles de Fresnel définissant les microlentilles (11).

**11.** Réseau de microlentilles (1) comportant plusieurs microlentilles (11) disposées pour faire respectivement converger une lumière incidente sur plusieurs zones de pixels adjacentes au réseau, ledit réseau de microlentilles (1) comprenant un substrat (10) qui présente des surfaces principales extérieures planes, lesdites microlentilles (11) étant définies par une variation de l'indice de réfraction (13) de la matière dudit substrat (10), et lesdites microlentilles (11) possédant des limites qui se fondent les unes dans les autres d'une manière contiguë entre des microlentilles voisines pour définir, au sein dudit substrat (10), un profil (12) ayant un indice d'isoréfraction.

# Fig. 1

*Fig. 2*

*Fig. 3    PRIOR ART*

Fig. 4 (a)

Fig. 4 (b)

EP 0 425 251 B1

## Fig. 5(a)   PRIOR ART

## Fig. 5(b)   PRIOR ART